# EUROPEAN PATENT SPECIFICATION

(11) **EP 2 235 915 B1**
(45) Date of publication and mention of the grant of the patent: **17.10.2012**
(21) Application number: 07859617.8
(22) Date of filing: 14.11.2007
(51) Int. Cl.: H04L 29/08, H04L 29/06

(54) **A METHOD AND SYSTEM FOR THE AUTOMATIC EXTENSION OF REGISTRATION PERIOD IN AN IMS NETWORK**
VERFAHREN UND SYSTEM ZUR AUTOMATISCHEN ERWEITERUNG DES REGISTRATIONSZEITRAUMS IN EINEM IMS-NETZWERK
PROCÉDÉ ET SYSTÈME D'EXTENSION AUTOMATIQUE DE LA PÉRIODE D'ENREGISTREMENT DANS UN RÉSEAU IMS

(43) Date of publication of application: 06.10.2010
(73) Proprietor: Alcatel Lucent, 75007 Paris (FR)
(72) Inventor: VISWANADHAM, Batchu, Bhaskara, Andhra Pradesh 500101 (IN); MUI, Paul, Countryside IL 60525 (US)
(74) Representative: Sciaux, Edmond
(86) International application number: PCT/IN2007/000539
(87) International publication number: WO 2009/063474

(56) References cited:
- WO-A-2006/118529
- US-A1- 2006 030 320
- DONOVAN J ROSENBERG CISCO SYSTEMS S: "Session Timers in the Session Initiation Protocol (SIP); rfc4028.txt" IETF STANDARD, INTERNET ENGINEERING TASK FORCE, IETF, CH, 1 April 2005 (2005-04-01), XP015041971 ISSN: 0000-0003
- GARCIA-MARTIN M ET AL: "Diameter Session Initiation Protocol (SIP) Application; draft-ietf-aaa-diameter-sip-app-08.txt" IETF STANDARD-WORKING-DRAFT, INTERNET ENGINEERING TASK FORCE, IETF, CH, vol. aaa, no. 8, 21 September 2005 (2005-09-21), XP015041456 ISSN: 0000-0004
- KUMAR B ET AL: "Mobility support for universal plug and play (UPnP) devices using session initiation protocol (SIP)" CONSUMER COMMUNICATIONS AND NETWORKING CONFERENCE, 2006. CCNC 2006. 20 06 3RD IEEE LAS VEGAS, NV, USA 8-10 JAN. 2006, PISCATAWAY, NJ, USA,IEEE, vol. 2, 8 January 2006 (2006-01-08), pages 788-792, XP010893284 ISBN: 978-1-4244-0085-0

## Description

### Background of the Invention

The present invention relates to a mobile communication system and in particular a system and method for automatic extension of registration period in an IP Multimedia Subsystem (IMS) architectural framework. Registration request can add binding between Address of Record and one or more Contact header fields. Each Contact header field contains the "expires" header parameter that indicates how long the User Equipment (UE) would like the binding to be valid. This value is a number indicating the binding time in seconds: If "expires" header parameter is not provided in the "Contact SIP (Session Initiation Protocol) header" of the REGISTER message then "Expires SIP header" field from REGISTER message will be used. Network will take a default expiration value as 3600 seconds, if none of these two values are received in the registration message.

Each UE is responsible for refreshing the bindings that it has previously established; otherwise binding will be removed for those contact header fields whose expiration period value became zero. After that, UE will no longer receive any incoming calls from network. Such a method is disclosed in WO 2006/118529.

Current registration mechanism requires periodic messages to be sent from the UEs for refreshing their registrations and this leads to extra message traffic at network. There might be a possibility of IMS core ignoring registration refresh messages, when it is fully overloaded with call setup messages.

### Summary of the Invention

The present invention relates to automatic extension of registration period without the UE sending explicit registration refresh messages requesting extension. The invention introduces a process between the S-CSCF and the HSS to extend the registration period automatically without input from the user and to use existing messages to send the new registration period back to the UE.

Upon call origination by a UE, Serving Call Session Control Function (S-CSCF) can optionally send the Diameter registrations message to Home Subscriber Server (HSS) to request the extension of the UE registration period. When called UE responds to the INVITE message S-CSCF can optionally send the Diameter registration message to HSS to request the extension of the UE registration period. The response to the INVITE message that triggers this event can be the 200 OK (INVITE) or a provisional response message.

The new concept will drastically reduce the registration refresh traffic and it will be beneficial to the UEs, who make origination calls and/or get incoming calls frequently.

### Brief Description of the Drawings

Figure 1 - System Overview
Figure 2 - IMS to IMS call without provisional responses
Figure 3 - IMS to IMS call with provisional responses
Figure 4 - IMS to IMS call with early Media and SDP negotiation through UPDATE method (Delayed Response from HSS)
Figure 5 - IMS to IMS call with SDP modification through re-INVITE method (Delayed Response from HSS)

### Detailed Description of the Drawings

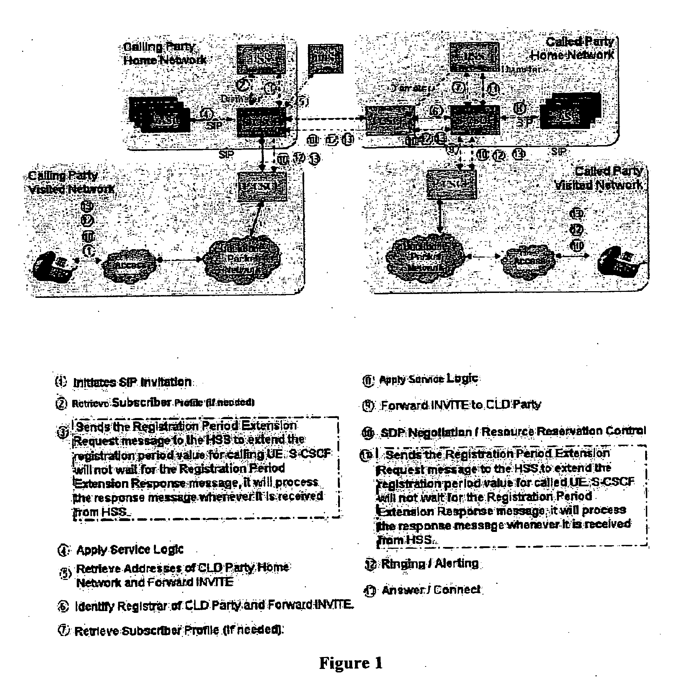

The present invention provides a method as disclosed un claim 1, and system as disclosed in claim 4, (Fig 1) to reduce SIP message traffic required for registration refresh. SIP is an application-layer control protocol that can establish, modify, and terminate multimedia sessions (conferences) such as Internet telephony calls. SIP can also invite participants to already existing sessions, such as multicast conferences. Registration request can add binding between Address of Record and one or more Contact header fields. Registration is one of the common operation in SIP. Registration is a method by which the server can learn the current location of the called UE. Upon initialization, and at periodic intervals, called UE's SIP phone sends REGISTER messages to a server in the domain known as a SIP registrar. The REGISTER messages associate the called UE's SIP or. SIPS Universal Resourse Identifier (URI) with the machine into which it is currently logged (conveyed as a SIP or SIPS URI in the Contact header field). The registrar writes this association, also called a binding, to a database, called the location service, where it can be used by the proxy in the server's domain. Often, a registrar server for a domain is co-located with the proxy for that domain. The Serving-CSCF (S-CSCF) performs the session control services for the UE. It maintains a session state as needed by the network operator for support of the services; the Interrogating-CSCF (1-CSCF) is mainly the contact point within an operator's network for all IMS connections destined to a subscriber of that network operator. The Home Subscriber Server (HSS) is the master database for a given user. It is the entity containing the subscription-related information to support the network entities actually handling calls/sessions. The S-CSCF and the HSS are defined in the standardization reference 3GPP TS 23.002.

The invention introduces a process between the S-CSCF and the HSS to extend the registration period automatically without input from the user and to use existing messages to send the new registration period back to the UE both at the call origination and termination. SIP and the registration binding are defined in the RFC 3261.

Whether S-CSCF will send the Diameter registration message to extend the UE registration period can be controlled by a service provider configurable field that specifies under what conditions S-CSCF should send the Diameter registration message to HSS to extend UE registration period. The new configurable field "Threshold of Remaining Registration Expiration Period to perform Automatic Registration Extension" could specify the percentage of the registration period remaining to determine if the Diameter registration message should be sent to HSS. Alternatively, the new configurable field "Threshold of Remaining Registration Expiration Period to perform Automatic Registration Extension" could specify in absolute value the amount of registration period remaining in order for S-CSCF to send the Diameter registration message to HSS. By default, the registration period will be extended by the same amount of time as the original registration period. If desired, another configurable field "Automatic Registration Extension Period" can be created to let service provider input how long the registration period should be extended.

The reason for creating a new service provider configurable field to determine whether S-CSCF should send the Diameter registration message to HSS or not is so that the service provider can control this automatic registration period extension to only occur when the original registration period is down to a certain amount or a certain percentage. This way we can avoid sending too many automatic registration extension messages for a UE that makes or receives many calls.

When the HSS sends the response message to the Diameter registration message to S-CSCF, and if the registration period has been successfully extended by the HSS, then S-CSCF will include this information using a new SIP header in SIP messages that it already sends to the UE to inform the UE that its registration period has been extended. S-CSCF will include this information in SIP messages that it needs to send to the UE anyway, there will not be any new SIP messages created for this purpose.

Different SIP messages can be used for this purpose (depending on how long does it take for the HSS to respond). See figures 1, 2, 3, and 4 for examples (these figures show IMS to IMS calls). IMS to PSTN and PSTN to IMS calls are not described since for the purpose of this invention, the IMS side of IMS to PSTN call and the IMS side of PSTN to IMS call are already covered in IMS to IMS call scenarios.

S-CSCF will not wait for the response from HSS, but will proceed with setting up the call so that call setup time will not be impacted by this new capability. Whenever the response from HSS is received, S-CSCF will inform the UE in the next message that it needs to proxy to the UE to inform the UE that its registration period has been extended. If it happens that the next message that S-CSCF will proxy to the UE is not a reliable message (without 100rel), S-CSCF will still include this information in the message, but will also include this information once again in the next reliable message that it will proxy to the UE.

A new SIP header Reg-Expiration-Period will be created for the purpose of informing UE that its registration period has been extended and the value of the new registration expiration period. This new SIP header Reg-Expiration-Period contains the URI of the UE for which the registration period has been extended. In addition, this new SIP header also contains the header parameter "expires" which is used to indicate the new registration expiration period in seconds and the Contact addresses for which the registration period has been extended.

This new SIP header Reg-Expiration-Period can be included in SIP messages such as: 200 OK (INVITE), ACK, 183, PRACK, 200 OK (PRACK), UPDATE, 200 OK (UPDATE), re-INVITE, 200 OK (re-INVITE), BYE, 200 OK(BYE), etc.

The 200 OK-message is used for conveying that the request has succeeded. The information returned with the response depends on the method used in the request e.g. 200 OK (INVITE) for call initiation. The 183 (Session Progress) response is used to convey information about the progress of the call that is not otherwise classified. The Reason-Phrase, header fields, or message body may be used to convey more details about the call progress (RFC 3261). The pre-alerting or alerting indications returned to the originating UE shall enable the originating UE to inform the calling user of the session progress prior to the arrival of the incoming media. PRACK represents provisional response acknowledgements. PRACK is defined in the RFC 3262.

When UE receives a SIP message with the SIP header Reg-Expiration-Period, UE will update its registration refresh period based on the header parameter "expires".

A new SIP message "Registration Period Extension" message will be created to inform the UE that registration period has been extended. This new message includes new SIP header Reg-Expiration-Period to carry the "new registration expiration period". This message would only be used in the unlikely event that the HSS is really overloaded AND the call ended early (e.g. called UE busy with no secondary call treatment).

UE has to understand the new registration expiration interval from 200 OK (INVITE), ACK, 183, PRACK, 200 OK (PRACK), UPDATE, 200 OK (UPDATE), re-INVITE, 200 OK (re-INVITE), BYE, 200 OK (BYE), Registration Period Extension" and etc messages. It overrides the existing registration expiration period value with the received value. There will not be any other changes to the UEs functionality, and it will keep track of the "new registration expiration period" value and sends the REGISTER message, whenever registration expiration value is going to expire. With new approach, registration expiration period will be automatically extended by network based on call activities.

With this approach, the registration period of the UE is automatically extended when UE makes or receives call. This will reduce the SIP message traffic needed for registration refresh.

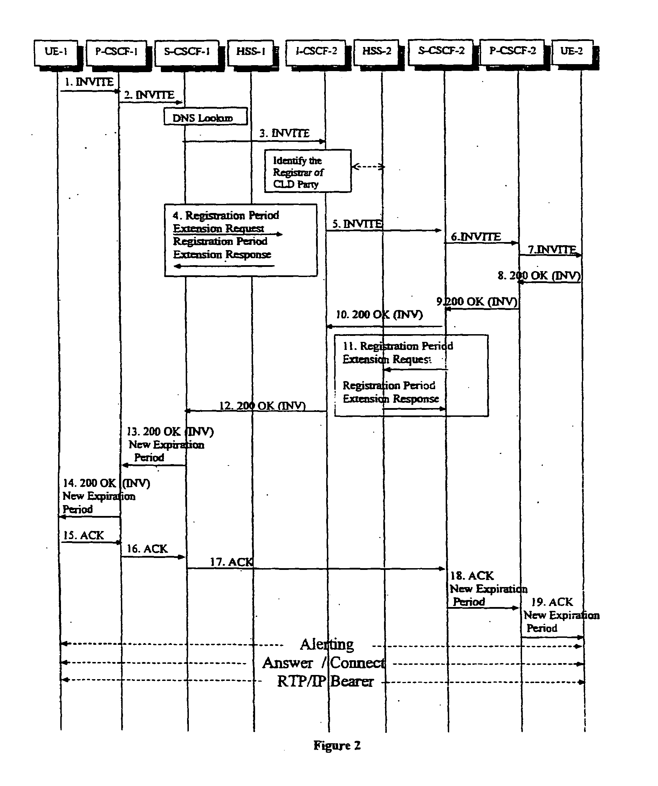

There are various scenarios associated with this invention. The first scenario is basic IMS to IMS call without provisional response. There is an assumption that HSS is not overloaded, hence, the response to the Diameter registration message is sent immediately from the HSS. In this case the Registration Period Extension processing is as follows (Fig 2):
S-CSCF-1 sends the INVITE message to (Interrogating Call Session Control Function) I-CSCF-2, and after that the Diameter registration message is sent to the HSS-1 for UE-1 to extend the registration expiration period. Since HSS is not an overloaded, so S-CSCF-1 receives the response to the Diameter registration message within the quite short time, and if the response message is successful, then S-CSCF-1 stores the new registration expiration period value corresponding to the URI of UE-1. S-CSCF-1 adds a new SIP header Reg-Expiration-Period in the 200 OK (INVITE) message with the URI of UE-1 and new registration expiration value using "expires" header parameter.
S-CSCF-2 sends the Diameter registration message to HSS-2 for UE-2 to extend the registration expiration period after S-CSCF-2 receives 200 OK (INVITE) message from UE-2 in response to the original INVITE message. S-CSCF-2 receives the response to the Diameter registration message, and if the response message is successful, then S-CSCF-2 stores the registration expiration period corresponding to the URI of the UE-2. S-CSCF-2 adds a new SIP header Reg-Expiration-Period in the ACK message with the URI of UE-2 and also conveys the new registration period value using "expires" header parameter.

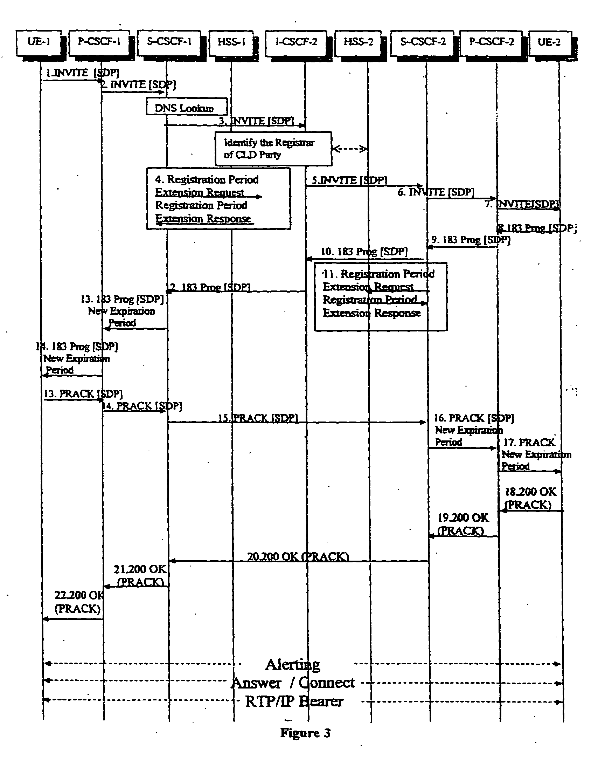

The second scenario is basic IMS-IMS call with Provisional Responses. There is an assumption that HSS is not overloaded, hence, the response to the Diameter registration message is sent immediately from the HSS. The UE-1 Registration Period Extension Processing is as follows (Fig 3):
S-CSCF-1 sends the INVITE message to the I-CSCF-2 and after that the Diameter registration message is sent to the HSS-1 for UE-1 to extend the registration expiration period. Since HSS is not in overload, so S-CSCF-1 receives the response to the Diameter registration message within the quite short time and if the response message is successful, then S-CSCF-1 stores the new registration expiration period value corresponding to the URI of UE-1. S-CSCF-1 adds a new SIP header Reg-Expiration-Period in the 183 Progress message with URI of UE-1 and new registration expiration value using "expires" header parameter.
S-CSCF-2 sends the Diameter registration message to HSS-2 for UE-2 to extend the registration expiration period after S-CSCF-2 receives 183 Progress message from UE-2 in response to the original INVITE message. S-CSCF-2 receives the response to the Diameter message and if the response message is successful, then S-CSCF-2 stores the registration expiration period corresponding to the URI of the UE-2. S-CSCF-2 adds a new SIP header Reg-Expiration-Period in the PRACK (183 Progress) with URI of UE-2 and also conveys the new registration period value using "expires" header parameter.

A session description should convey enough information to decide whether or not to participate in a session. The Session Description Protocol (SDP) is intended for describing multimedia sessions for the purposes of session announcement, session invitation, and other forms of multimedia session initiation. SDP may include additional pointers in the form of Universal Resources Identifiers (URIs) for more information about the session.

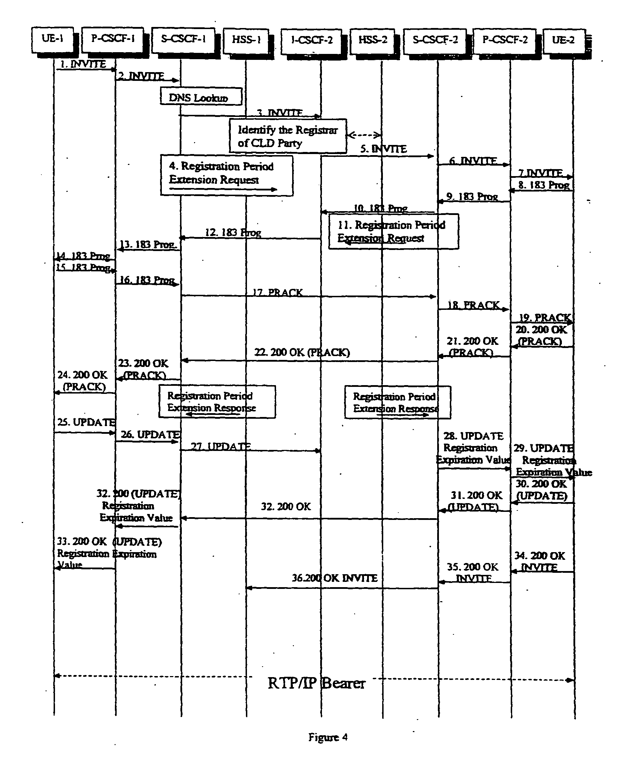

The third scenario is basic IMS to IMS call with early media and SDP negotiation through UPDATE. There is an assumption that HSS is overloaded, hence, the response to the Diameter registration message is sent late. UPDATE message is being sent to negotiate the media capabilities between UEs for early media. The UE-1 Registration Period Extension Processing is as follows (Fig 4) :
S-CSCF-1 sends the INVITE message to the I-CSCF-2 and after that the Diameter registration message is sent to the HSS-1 for UE-1 to extend the registration expiration period. Since HSS is in overload condition, so S-CSCF-1 receives the response to the Diameter registration message after 200 OK (PRACK) message has been sent to the P-CSCF-1. If the response message is successful, then S-CSCF-1 stores the new registration expiration period value corresponding to the URI of Calling UE. S-CSCF-1 adds a new SIP header Reg-Expiration-Period in the 200 OK (UPDATE) message with URI of UE-1 and new registration expiration value using "expires" header parameter.
S-CDCF-2 sends the Diameter registration message to the HSS-2 for UE-2 to extend the registration expiration period after S-CSCF-2 receives 183 Progress message from UE-2 in response to the original INVITE message. S-CSCF-2 receives the response to the Diameter registration message and if the response message is successful, then S-CSCF-2 stores the registration expiration period corresponding to the URI of the UE-2. S-CSCF-2 adds a new SIP header Reg-Expiration-Period in the UPDATE message with the URI of UE-2 and also conveys the new registration period value using "expires" header.

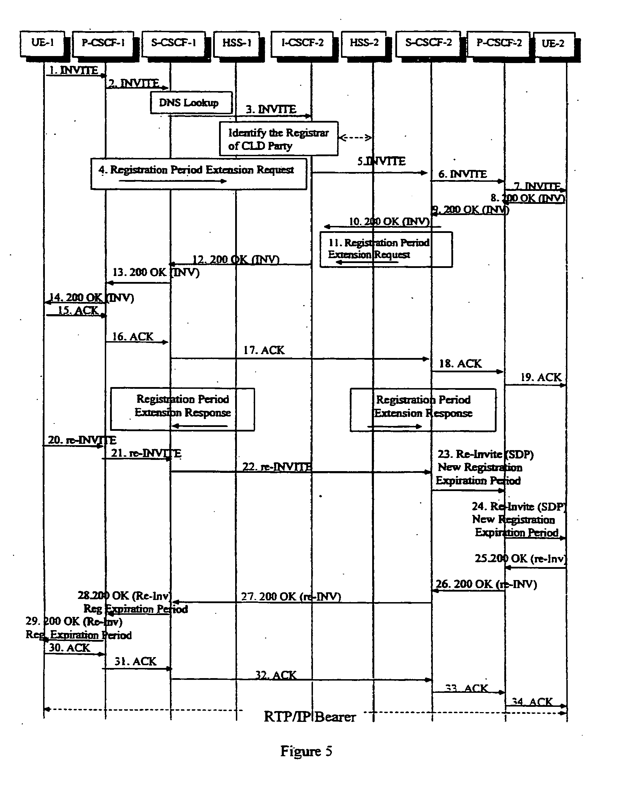

The fourth scenario is basic IMS to IMS call scenario without provisional responses, but there is an assumption that HSS is in overload condition, hence, the response to the Diameter registration message is sent late. Re-INVITE message is being sent to negotiate the media capabilities between UEs after media is established. The UE-1 Registration Period Extension Processing is as follows (Fig 5) :
S-CSCF-1 sends the INVITE message to the I-CSCF-2 and after that the Diameter registration message is sent to the HSS-1 for UE-1 to extend the registration expiration period. Since HSS is in overload condition, so S-CSCF-1 receives the response to the Diameter registration message after ACK (200 OK) message sent to the P-CSCF-1. If the response message is successful, then S-CSCF-1 stores the new registration expiration period value corresponding to the URI of Calling UE. S-CSCF-1 adds a new SIP header Reg-Expiration-Period in the 200 OK (re-INVITE) message with URI of UE-1 and new registration expiration value using "expires" header parameter.
S-CSCF-2 sends the Diameter registration message to the HSS-2 for UE-2 to extend the registration expiration period after S-CSCF-2 receives 200 OK (INVITE) message from UE-2 in response to the original INVITE message. S-CSCF-2 receives the response to the Diameter registration message and if the response message is successful, then S-CSCF-2 stores the registration expiration period corresponding to the URI of the UE-2. S-CSCF-2 adds a new SIP header Reg-Expiration-Period in the re-INVITE message with URI of UE-2 and also conveys the new registration period value using "expires" header parameter.

With the current invention the SIP registration refresh message traffic will be significantly reduced, since registration expiration period will be automatically extended based on call activities of UEs. UEs don't need to extend their registration expiration period if they make origination calls or gets incoming calls. Current registration mechanism requires more messages for refreshing their registrations and it will certainly require extra message traffic at network. This new concept will drastically reduce the registration refresh traffic and it will be fully benefited for the UEs, who make origination calls and/or gets incoming calls. When UE makes origination calls or gets incoming calls, then registration expiration period will be automatically extended to some configurable interval of time or fixed interval of time.

## Claims

1. A method for the automatic extension of registration expiration period when a User Equipment, UE makes an origination call or receives an incoming call in an IP Multimedia Subsystem, IMS, comprising the steps of
- defining values for control parameters "Threshold of Remaining Registration Expiration Period to Perform Automatic Registration Extension" and "Automatic Registration Extension Period"
- configuring Serving Call Session Control Function, S-CSC, in the IMS core to initiate a Diameter registration message to an associated HSS, according to said values: and
- sending response back to the UE confirming the registration expiration period extension.

2. The method as claimed in claim 1 wherein the automatic registration expiration period extension and frequency of registration renewal for said Diameter registration message is controlled by the service provider by configuring the control parameters "Threshold of Remaining Registration Expiration Period to Perform Automatic Registration Extension" and "Automatic Registration Extension Period" of the IMS core.

3. The method as claimed in claim 1 wherein the said Diameter message for registration refresh response being the response confirming the registration expiration period extension is sent to the UE by configuring the available Session Initiation Protocol, SIP, messages in the IMS core to include the conformation of registration expiration period extension and the new registration expiration period.

4. A system for the automatic extension of registration expiration period when a User Equipment, UE makes an origination call or receives an incoming call in an IP Multimedia Subsystem, IMS, comprising
- Means to define values for control parameters "Threshold of Remaining Registration Expiration Period to Perform Automatic Registration Extension" and "Automatic Registration Extension Period" for specifying conditions under which a Serving Call Session Control Function, S-CSCF, in the IMS core should initiate the Diameter registration message
- Means to configure the S-CSCF in the IMS core to initiate the Diameter registration message to an associated HSS, according to said values
- SIP messages being configured to include the response back to the UE confirming the registration expiration period extension.

5. The System of claim 4 wherein the IMS core comprises of service provider configurable control parameters "Threshold of Remaining Registration Expiration Period to Perform Automatic Registration Extension" and "Automatic Registration Extension Period" to control the automatic registration expiration period extension and the frequency of registration renewal.

6. The system of claim 4 wherein the said SIP message header of the existing Session Initiation Protocol, SIP, messages in the IMS core includes the confirmation of registration expiration period extension and the new registration expiration period.

## Patentansprüche

1. Verfahren zur automatischen Verlängerung der Registrierungsablaufzeit, wenn ein Benutzerendgerät, UE, einen ausgehenden Anruf tätigt oder einen eingehenden Anruf empfängt, in einem IP-Multimedia-Subsystem, IMS, die folgenden Schritte umfassend:
- Definieren von Werten für Steuerparameter "Grenzwert für die verbleibende Registrierungsablaufzeit, um eine automatische Registrierungsverlängerung durchzuführen" und "Automatische Registrierungsverlängerungszeit"
- Konfigurieren der Serving Call Session Control-Funktion, S-CSCF, im IMS-Kern, um eine Diameter-Registrierungsnachricht an einen assoziierten HSS, gemäß den besagten Werten zu initiieren; und
- Zurücksenden einer Antwort an das UE, welche die Verlängerung der Registrierungsablaufzeit bestätigt.

2. Verfahren nach Anspruch 1, wobei die automatische Verlängerung der Registrierungsablaufzeit und die Häufigkeit der Registrierungserneuerung für die besagte Diameter-Registrierungsnachricht von dem Dienstanbieter durch Konfigurieren der Steuerparameter "Grenzwert für die verbleibende Registrierungsablaufzeit, um eine automatische Registrierungsverlängerung durchzuführen" und "Automatische Registrierungsverfängerungszeit" des IMS-Kerns gesteuert werden.

3. Verfahren nach Anspruch 1, wobei die besagte Diameter-Nachricht für die Registrierungsaktualisierungsnachricht, welche die Antwort ist, die die Verlängerung der Registrierungsablaufzeit bestätigt, durch Konfigurieren der verfügbaren Sitzungsaufbauprotokoll bzw. SIP-Nachrichten in dem IMS-Kern, um die Bestätigung der Verlängerung der Registrierungsablaufzeit und die neue Registrierungsablaufzeit einzufügen, gesendet wird.

4. System zur automatischen Verlängerung der Registrierungsablaufzeit, wenn ein Benutzerendgerät, UE, einen ausgehenden Anruf tätigt oder einen eingehenden Anruf empfängt, in einem IP-Multimedia-Subsystem, IMS, umfassend:
- Mittel zum Definieren von Werten für Steuerparameter "Grenzwert für die verbleibende Registrierungsablaufzeit, um eine automatische Registrierungsverlängerung durchzuführen" und "Automatische Registrierungsverlängerungszeit" zum Spezifizieren von Bedingungen, unter welchen eine Serving Call Session Control-Funktion, S-CSCF, im IMS-Kern eine Diameter-Registrierungsnachricht initiieren soll;
- Mittel zum Konfigurieren der S-CSCF im IMS-Kern, um die Diameter-Registrierungsnachricht an einen assoziierten HSS gemäß den besagten Werten zu initiieren; und
- wobei die SIP-Nachrichten dafür konfiguriert sind, die Rückantwort an das UE, welche die Verlängerung der Registrierungsablaufzeit bestätigt, zu enthalten.

5. System nach Anspruch 4, wobei der IMS-Kern vom Dienstanbieter konfigurierbare Steuerparameter "Grenzwert für die verbleibende Registrierungsablaufzeit, um eine automatische Registrierungsverlängerung durchzuführen" und "Automatische Registrierungsverlängerungszeit" umfasst, um die automatische Verlängerung der Registrierungsablaufzeit und die Häufigkeit der Registrierungserneuerung zu steuern.

6. System nach Anspruch 4, wobei der Header der besagten SIP-Nachricht der bestehenden Sitzungsaufbauprotokoll bzw. SIP-Nachrichten im IMS-Kern die Bestätigung der Verlängerung der Registrierungsablaufzeit und die neue Registrierungsablaufzeit enthält.

## Revendications

1. Procédé pour l'extension automatique de la période d'expiration d'enregistrement lorsqu'un équipement utilisateur, UE, effectue un appel sortant ou reçoit un appel entrant dans un sous-système multimédia IP, IMS, comprenant les étapes suivantes :
- définir des valeurs pour les paramètres de contrôle « Seuil de la période d'expiration d'enregistrement restante pour exécuter l'extension d'enregistrement automatique » et « Période d'extension d'enregistrement automatique »
- configurer une fonction de commande de session d'appel de service, S-CSCF, dans le coeur IMS pour lancer un message d'enregistrement Diameter vers un HSS associé, conformément auxdites valeurs ; et
- renvoyer à l'UE une réponse confirmant l'extension de la période d'expiration d'enregistrement.

2. Procédé selon la revendication 1 dans lequel l'extension de la période d'expiration d'enregistrement automatique et la fréquence de renouvellement d'enregistrement pour ledit message d'enregistrement Diameter sont commandées par le fournisseur de services en configurant les paramètres de contrôle « Seuil de la période d'expiration d'enregistrement restante pour exécuter l'extension d'enregistrement automatique » et « Période d'extension d'enregistrement automatique » du coeur IMS.

3. Procédé selon la revendication 1 dans lequel ledit message Diameter pour la réponse de rafraîchissement d'enregistrement étant la réponse confirmant que l'extension de la période d'expiration d'enregistrement est envoyée à l'UE en configurant les messages de protocole d'initiation de session, SIP, disponibles dans le coeur IMS pour inclure la confirmation de l'extension de la période d'expiration d'enregistrement et de la nouvelle période d'expiration d'enregistrement.

4. Système pour l'extension automatique de la période d'expiration d'enregistrement lorsqu'un équipement utilisateur, UE, effectue un appel sortant ou reçoit un appel entrant dans un sous-système multimédia IP, IMS, comprenant :
- moyens pour définir des valeurs pour les paramètres de contrôle « Seuil de la période d'expiration d'enregistrement restante pour exécuter l'extension d'enregistrement automatique » et « Période d'extension d'enregistrement automatique » pour spécifier des conditions selon lesquelles une fonction de commande de session d'appel de service, S-CSCF, dans le coeur IMS doit lancer le message d'enregistrement Diameter
- moyens pour configurer la S-CSCF dans le coeur IMS pour lancer le message d'enregistrement Diameter vers un HSS associé, conformément auxdites valeurs ;
- les messages SIP étant configurés pour inclure la réponse renvoyée à l'UE confirmant l'extension de la période d'expiration d'enregistrement.

5. Système selon la revendication 4 dans lequel le coeur IMS comprend les paramètres de contrôle pouvant être configurés par le fournisseur de services « Seuil de la période d'expiration d'enregistrement restante pour exécuter l'extension d'enregistrement automatique » et « Période d'extension d'enregistrement automatique » pour commander l'extension de la période d'expiration d'enregistrement automatique et la fréquence de renouvellement d'enregistrement.

6. Système selon la revendication 4 dans lequel ledit en-tête de message SIP des messages de protocole d'initiation de session, SIP, existants dans le coeur IMS contient la confirmation de l'extension de la période d'expiration d'enregistrement et de la nouvelle période d'expiration d'enregistrement.
